# FASCICULE DE BREVET EUROPEEN

(11) **EP 3 915 817 B1**
(45) Date de publication et mention de la délivrance du brevet: **26.11.2025**
(21) Numéro de dépôt: 21174911.4
(22) Date de dépôt: 20.05.2021
(51) Int. Cl.: B60J 5/06, B61D 19/02, B61D 17/18

(54) **VANTAIL POUR VEHICULE DE TRANSPORT COMPRENANT DES PROPRIETES THERMIQUES AMELIOREES, ET VEHICULE DE TRANSPORT AINSI EQUIPE**
ÖFFNUNGSFLÜGEL FÜR EIN TRANSPORTFAHRZEUG MIT VERBESSERTEN THERMISCHEN EIGENSCHAFTEN UND DAMIT AUSGESTATTETES TRANSPORTFAHRZEUG
DOOR LEAF FOR TRANSPORT VEHICLE COMPRISING IMPROVED THERMAL PROPERTIES, AND TRANSPORT VEHICLE EQUIPPED WITH SAME

(30) Priorité: 27.05.2020 FR 2005570
(43) Date de publication de la demande: 01.12.2021
(73) Titulaire: Faiveley Transport Tours, 37701 Saint Pierre des Corps Cedex (FR)
(72) Inventeur: SALLES, Olivier, 35133 SERUSIER (FR); BRION, Florian, 37390 NOTRE DAME D'OE (FR); MONTANIE, Thierry, 75016 PARIS (FR); DE BAST, Jean-François, 37270 MONTLOUIS-SUR-LOIRE (FR); VAUTIER, Fabien, 37270 VERETZ (FR)
(74) Mandataire: IXAS Conseil

(56) Documents cités:
- CN-A- 108 725 465
- JP-A- 2006 062 634
- JP-A- H09 235 956

## Description

### Domaine technique de l'invention

La présente invention concerne le domaine technique des portes destinées à équiper des véhicules de transport, notamment du type train, tramway, métros ou encore trolleybus ou bus. L'invention vise plus spécifiquement de telles portes, qui sont munies d'au moins un vantail présentant des propriétés thermiques améliorées.

### Etat de la technique

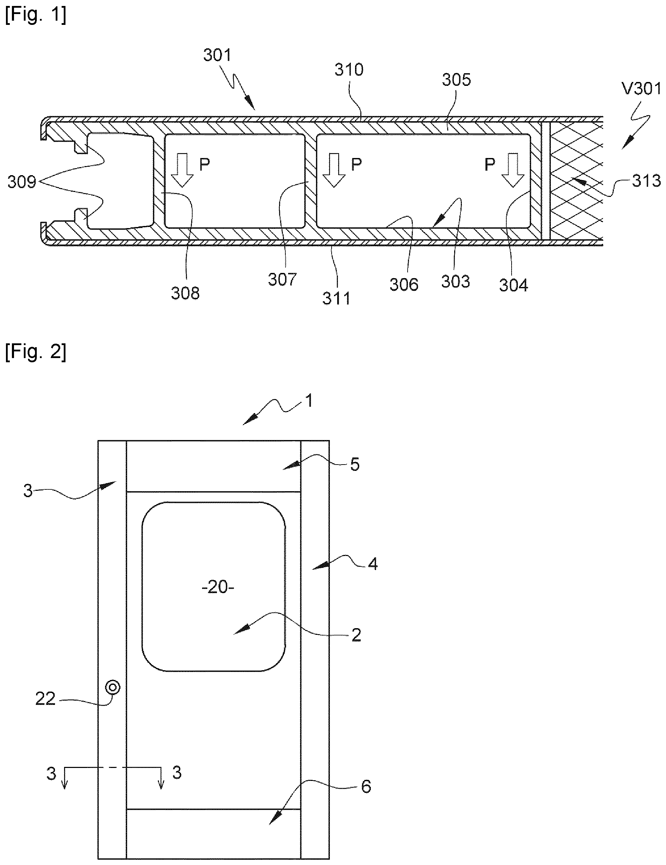

La figure 1 illustre un vantail 301 de type classique, destiné à équiper un véhicule de transport. Ce vantail comprend tout d'abord deux parements 310 et 311, destinés à être placés sur les côtés respectivement intérieur et extérieur de la caisse du véhicule. Ces parements délimitent ainsi un volume intérieur V 301 du vantail, qui est occupé par une âme de remplissage 313, réalisée essentiellement en un matériau rigide. Cette âme se trouve typiquement collée sur les parements précités, l'ensemble formant un sandwich.

Le vantail 301 comprend en outre un cadre structurel, qui s'étend à la périphérie d'au moins une partie de l'âme 313. Ce cadre se compose notamment d'un profilé 303, typiquement réalisé en aluminium, lequel comporte un fond 304 à partir duquel s'étendent des ailes parallèles 305 et 306. Chacune de ces ailes se trouve fixée sur un parement respectif 310 ou 311, typiquement par collage, sachant que d'autres modes de fixation sont possibles, comme par exemple le rivetage, le soudage ou encore le vissage. Ces ailes sont en outre mutuellement reliées au moyen de raidisseurs 307 et 308, qui s'étendent parallèlement au fond 304. Ces raidisseurs assurent une fonction d'espacement, permettant une stabilité mécanique satisfaisante du profilé et, par conséquent, de l'ensemble du cadre structurel. Enfin ce profilé 303 est équipé d'arêtes 309, qui permettent la fixation d'un joint d'étanchéité.

Le problème technique, visé plus spécifiquement par la présente invention, est celui de l'isolation thermique à bord des véhicules de transport du type précité. En effet le vantail classique, tel que décrit ci-dessus, présente une structure qui lui confère certes une rigidité et une tenue mécanique satisfaisantes. Néanmoins, cette structure crée des ponts thermiques, qui sont matérialisés par les flèches P sur la figure 1. Ces ponts thermiques, qui s'étendent entre les faces du vantail placées respectivement du côté intérieur et du côté extérieur du véhicule, sont néfastes à une bonne isolation thermique globale quel que soit le niveau d'isolation thermique de l'âme 313.

Afin d'améliorer cette isolation thermique des vantaux, différentes solutions ont été proposées. On citera tout d'abord le modèle d'utilité allemand DE 20 2018 102 451, lequel prévoit d'utiliser un matériau à base de bois, au sein même de la structure du vantail. Cette première solution ne s'est pas révélée satisfaisante, étant donné qu'elle ne permet pas de supprimer totalement les ponts thermiques au niveau du cadre réalisé en aluminium.

On connaît également, par la demande de brevet européen EP 2 882 625, une proposition de découplage thermique au niveau du vantail. Ce document ne délivre cependant pas une solution technique entièrement satisfaisante. En effet l'assemblage proposé dans ce document n'est tout d'abord pas compatible avec une forte tenue mécanique, qui est nécessaire pour certains types de véhicules comme par exemple les trains régionaux. Par ailleurs l'enseignement de cette demande de brevet n'est pas compatible, de manière commode, avec des vantaux de forme galbée.

On citera également la demande de brevet européen 2 951 072, qui permet de limiter la flexion d'un vantail très isolé lors des dilatations thermiques différentielles. En substance il y a création, entre la face extérieure et la face intérieure du vantail, d'une zone de mobilité et d'une zone de blocage.

La demande de brevet européen EP 3 455 118 a proposé un vantail dont le cadre structurel est de type ouvert, à savoir qu'il ne s'étend pas sur l'intégralité de la périphérie de ce vantail. Par conséquent, au moins un des côtés se trouve nécessairement isolé, sur le plan thermique. Cette solution s'accompagne cependant d'autres inconvénients. En effet, l'apparition d'une flèche importante a été constatée, par exemple sous l'effet d'une poussée des voyageurs ou des ondes de pression. Ce phénomène est de nature à engendrer une déformation inacceptable du vantail, qui est alors susceptible de sortir hors de son gabarit. Par ailleurs il contribue à augmenter les contraintes mécaniques, dans les tôles constitutives du vantail.

Une conception de vantail comprenant une couche d'isolation thermique en aérogel a été décrite dans la demande de brevet allemand 10 2014 210 771. Cette solution ne permet cependant pas de résoudre totalement le problème des ponts thermiques. Par ailleurs, elle induit potentiellement des problèmes de tenue mécanique, du fait de la présence de l'aérogel. Enfin ce dernier présente un coût élevé, ce qui augmente de manière inacceptable le prix de revient global du vantail.

Il existe également des vantaux pour véhicule ferroviaire, qui sont réalisés entièrement en un matériau composite. On citera notamment les conceptions mises au point par les sociétés Milwaukee ou encore Penso. Ces solutions ne sont cependant pas satisfaisantes, du fait du surcoût important lié à l'utilisation massive de ce matériau composite.

Enfin, on mentionnera la demande de brevet japonais JP 2006 062634. Cette dernière décrit un vantail, dont les parements sont séparés par une structure alvéolaire en aluminium. Par ailleurs il est prévu un profilé en forme de U, dont les ailes s'étendent au voisinage des parements précités. Un tel agencement ne permet pas de remédier au problème technique des ponts thermiques, tel que présenté ci-dessus.

Compte tenu de ce qui précède, un objectif de l'invention est de remédier au moins partiellement aux inconvénients de l'art antérieur ci-dessus.

L'invention vise en particulier à proposer un vantail dont la structure lui confère de bonnes propriétés d'isolation thermique, tout en conservant une stabilité mécanique satisfaisante.

L'invention vise également à proposer un tel vantail, qui permet une mise en place commode et un maintien fiable des joints d'étanchéité.

L'invention vise en outre à proposer un tel vantail, dont le prix de revient est compétitif.

L'invention vise également à proposer un tel vantail, dont la structure peut être adaptée à une première monte, ou bien à un remplacement sur un véhicule déjà existant.

Au moins un des objectifs ci-dessus est atteint par l'intermédiaire d'un vantail selon la revendication 1 annexée.

Des caractéristiques avantageuses du vantail conforme à l'invention, font l'objet des revendications 2 à 13 annexées.

L'invention a également pour objet une porte pour véhicule de transport, selon la revendication 14 annexée.

L'invention enfin pour objet un véhicule de transport, selon la revendication 15 annexée.

L'invention est décrite ci-après, en référence aux dessins annexés, donnés uniquement à titre d'exemples non limitatifs, dans lesquels
[Fig.1] est une vue en coupe transversale, illustrant le cadre structurel d'un vantail selon l'état de la technique, tel que décrit ci-dessus.
[Fig.2] est une vue de face, illustrant un vantail pour porte de véhicule selon l'invention.
[Fig.3] est une vue en coupe transversale selon la ligne 3-3 à la figure 2, illustrant plus particulièrement une région verticale du cadre structurel du vantail selon l'invention.
[Fig.4] est une vue en perspective à plus grande échelle, illustrant plus particulièrement une structure alvéolaire appartenant au cadre du vantail selon l'invention.
[Fig.5] est une vue en perspective, illustrant une structure alvéolaire équipant un vantail selon une variante de réalisation de l'invention.
[Fig.6] est une vue en coupe transversale, analogue à la figure 3, illustrant un vantail équipé de la structure alvéolaire de la figure précédente.
[Fig.7] est une vue en coupe transversale, analogue à la figure 3, illustrant une première région verticale d'un cadre structurel de vantail selon une variante de réalisation de l'invention.
[Fig. 8] est une vue en coupe transversale, analogue à la figure 7, illustrant une seconde région verticale du cadre de vantail selon la variante de réalisation de cette figure 7.
[Fig. 9] est une vue de face, analogue à la figure 2, illustrant un vantail selon une autre variante de réalisation de l'invention.
[Fig. 10] est une vue de face, analogue à la figure 2 et à la figure 9, illustrant un vantail selon encore une autre variante de réalisation de l'invention.
[Fig. 11] est une vue en coupe transversale selon la ligne 11-11 sur la figure 10, illustrant plus particulièrement une région verticale du cadre de baie appartenant au vantail de la figure 10.

### Description détaillée

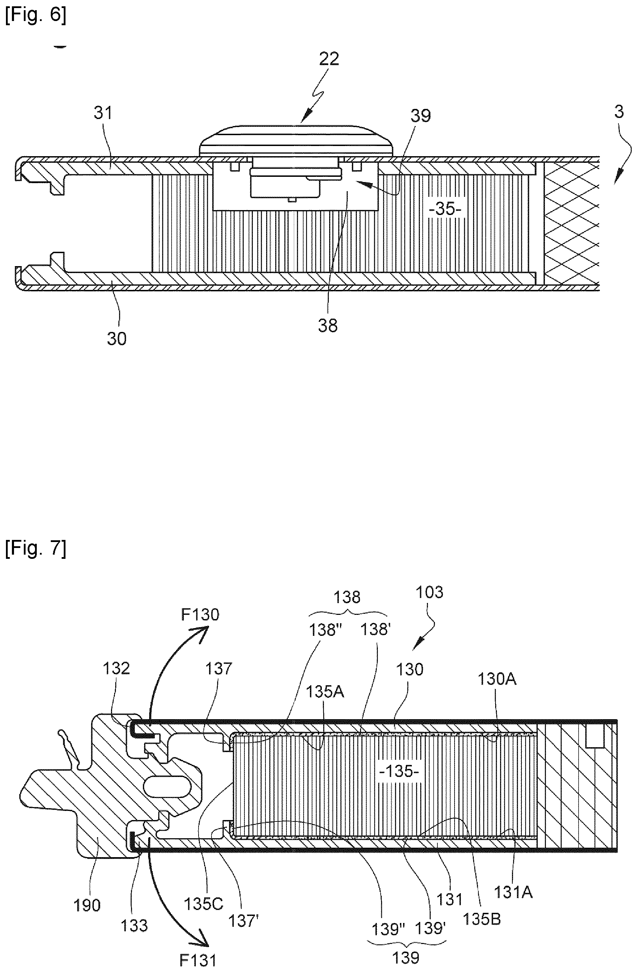

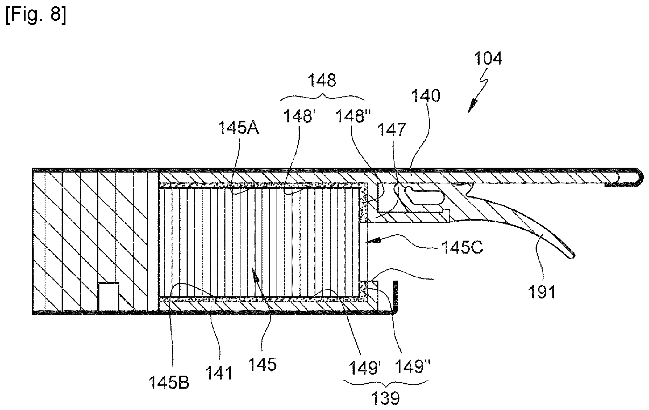

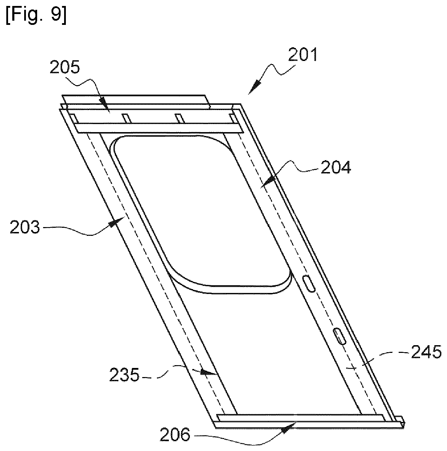

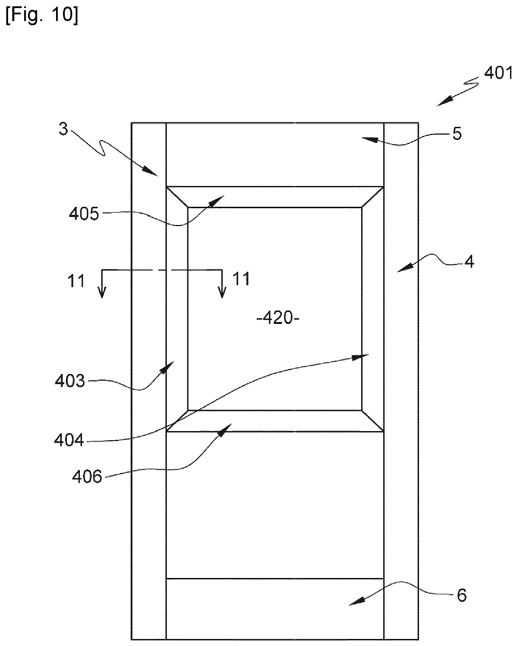

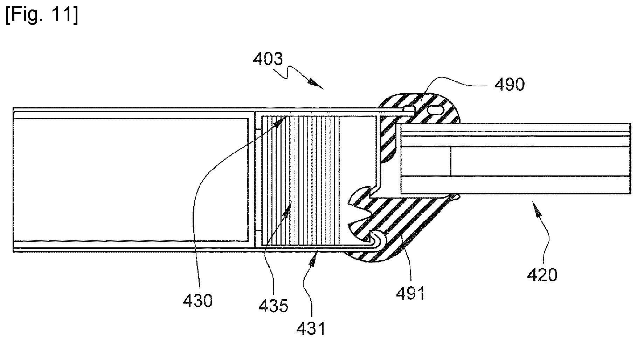

Les références suivantes sont utilisées dans la présente description, ainsi que dans les figures annexées
Premier mode de réalisation - figures 2 à 6
   1 vantail selon l'invention
   V1 volume intérieur du vantail
   2 corps du vantail
   20 vitre
   22 organe de manœuvre
   24 26 parements respectivement intérieur et extérieur
   3 à 6 organes périphériques
   30 31 profilés
   E30 E31 épaisseur 30 31
   30A 31A faces internes des profilés
   32 33 arêtes
   34 espace libre
   35 bloc d'espacement
   E35 L35 épaisseur longueur de 35
   36 alvéoles
   36A 36B extrémités opposées des alvéoles
   38 évidement dans le bloc 35
   39 échancrure dans le profilé 31
Deuxième mode de réalisation - figures 7 et 8
   101 vantail
   130 131 140 141 profilés
   190 191 joint
   132 133 arêtes
   135 bloc
   137 137' 147 147' nervures
   138 139 148 149 couches adhésives
   138'139' 148' 149' régions longitudinales des couches 138 139 148 149
   138"139"148" 149" régions transversales des couches 138 139 148 149 Troisième mode de réalisation - figure 9
   201 vantail
   203 204 montants
   235 245 blocs d'espacement
   205 206 traverses
État de la technique - figure 1
   301 vantail de l'art antérieur
   310 311 parements
   V301 volume intérieur du vantail 301
   313 âme de remplissage
   303 profilé
   304 fond
   305 306 ailes
   307 308 raidisseurs
   P flèches matérialisant les ponts thermiques
Quatrième mode de réalisation - figure 10 et 11
   401 vantail
   3 à 6 organes périphériques formant le cadre de vantail
   20 vitre ou baie
   403 à 406 organes périphériques formant le cadre de baie

La figure 2 annexée illustre un vantail selon l'invention, désigné dans son ensemble par la référence 1, qui équipe une porte de véhicule de transport, laquelle n'est pas représentée sur les figures. Cette porte comprend, de manière habituelle, un ouvrant formé par au moins un vantail, tel celui 1, ainsi qu'un dormant. Ce dernier se trouve disposé à la périphérie d'une baie, ménagée dans la caisse de ce véhicule. Cette porte peut typiquement être munie d'un unique vantail tel celui 1, ou bien encore de deux vantaux sensiblement identiques.

Dans l'exemple illustré, le vantail 1 équipe une porte pour train du type train régional. L'invention trouve cependant son application à des vantaux destinés à équiper d'autres véhicules de transport tels que notamment des tramways, des trolleybus, ou encore des trains différents de celui mentionné ci-dessus. Dans ce qui suit, on suppose que le vantail 1 est vertical, notamment en référence à la figure 2.

Par ailleurs, les termes « intérieur » et « extérieur » sont utilisés en référence à la caisse de ce véhicule de transport. Enfin les termes « interne » et « externe » sont utilisés en référence au vantail, selon une vue de face de ce dernier. Exprimé autrement le terme « interne » est relatif au centre de ce vantail, alors que le terme « externe » est relatif à la périphérie de ce vantail, selon une telle vue de face.

Le vantail 1 comprend, de manière connue, un corps central 2 équipé notamment d'une vitre 20 et d'un organe de manoeuvre 22, par exemple du type bouton-poussoir. Ce corps comporte typiquement deux parements opposés respectivement intérieur 24 et extérieur 26, lesquels définissent un volume intérieur V1 du vantail. Par ailleurs une âme 28, de type connu en soi, est intercalée entre ces parements en étant réalisée en tout matériau approprié, notamment en nid d'abeille métallique, ou encore en une mousse rigide réalisée par exemple polyuréthane.

En référence notamment à la figure 2, l'âme 28 précitée occupe uniquement la partie centrale, selon une vue de face, du volume intérieur V1. Par ailleurs un cadre structurel, encore dénommé cadre de vantail, s'étend à la périphérie externe de ce corps, selon cette même vue de face. Ce cadre, qui constitue un élément essentiel de l'invention, est décrit plus en détail sur les figures 2 et suivantes.

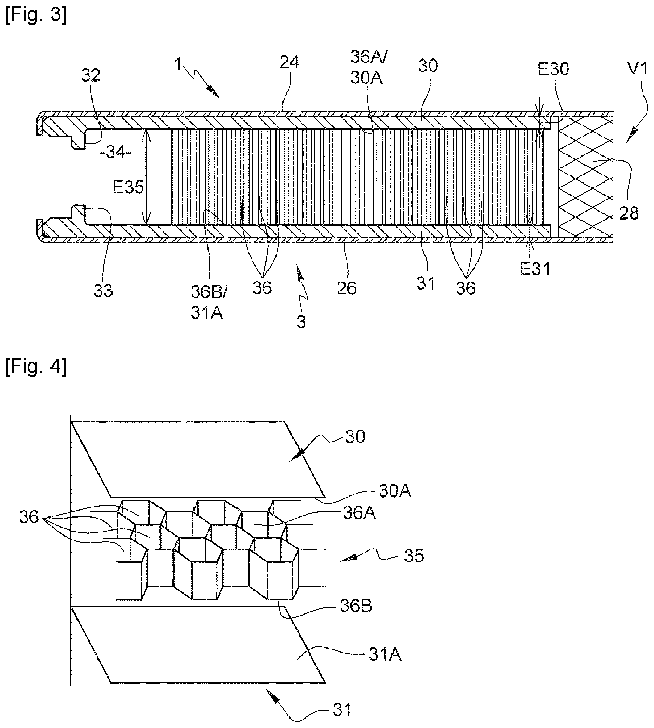

De façon plus précise ce cadre est composé de quatre organes dits périphériques, dont les structures sont mutuellement similaires, qui sont numérotés 3 à 6. De façon plus précise on retrouve tout d'abord deux organes périphériques verticaux, formant des montants respectivement avant 3 et arrière 4 en référence au sens d'avancée du vantail. On retrouve également deux organes périphériques horizontaux, formant des traverses respectivement supérieure 5 et inférieure 6. On va maintenant décrire plus en détail le montant 3, en référence à la figure 3.

On notera que le montant 4 présente une structure globalement similaire à celle du montant 3. Les éventuelles différences entre ces montants, qui sont par exemple illustrés en référence aux modes de réalisation des figures 7 et 8, sont sans incidence sur l'objet de l'invention. De façon analogue la traverse 5 présente une structure globalement similaire à celle de la traverse 6, les éventuelles différences entre ces traverses étant là encore sans incidence sur l'objet de l'invention. Sur les figures les éléments mécaniques du montant 4 et des traverses 5,6, analogues à ceux du montant 3, sont affectés des mêmes numéros de référence, en remplaçant le premier chiffre 3 par les chiffres respectivement 4,5 et 6.

Une des différences entre le cadre structurel 3 - 6 de l'invention et celui de l'art antérieur, présenté à la figure 1 ci-dessus, réside dans le fait que l'invention fait appel à des profilés distincts. En substance, comme le montre la figure 3, l'organe périphérique vertical 3 comprend deux profilés 30 et 31. Chacun de ces profilés est placé sur la face interne d'un parement respectif 24 et 26. De façon typique, chaque profilé 30 et 31 s'étend sensiblement jusqu'à l'extrémité longitudinale, dite libre, du parement contre lequel il est placé. La fixation mutuelle entre chaque profilé et chaque parement est réalisé par tous moyens appropriés, de préférence par collage.

Par ailleurs, ces profilés 30 et 31 sont pourvus d'arêtes respectives 32 et 33 permettant de fixer un joint d'étanchéité. Un tel joint d'étanchéité, qui est de type connu en soi n'est pas représenté sur les figures 2 à 6. En revanche on retrouve, sur les figures 7,8 et 11, des joints classiques susceptibles d'équiper un vantail conforme à la présente invention.

Les profilés 30 et 31 sont réalisés respectivement en un premier matériau et un second matériau. Étant donné que, comme on l'a vu ci-dessus, ces profilés sont distincts, ces matériaux peuvent être différents. De manière préférée, on utilise un unique matériau constitutif de ces profilés. À titre indicatif, ce matériau peut être de l'aluminium, un alliage d'aluminium, un acier ou encore un acier inoxydable.

Le montant 3 comprend en outre un bloc 35, assurant une double fonction d'espacement et d'isolation thermique. Ce bloc s'étend sur une partie de la dimension longitudinale des profilés, du côté interne de ces derniers, à savoir du côté adjacent à l'âme. Cela permet de délimiter un espace libre 34, non occupé par le bloc 35, du côté externe des profilés.

Ce bloc est une structure alvéolaire qui se compose, comme le montre la figure 4, d'une pluralité d'alvéoles 36 disposées les unes à côté des autres. Ces alvéoles relient les profilés 30 et 31, à savoir que les extrémités opposées 36A et 36B de ces alvéoles débouchent sur ces profilés. On notera que ces alvéoles peuvent être, de manière connue en soi, aussi bien de type ouvertes ou de type fermées. Dans l'un ou l'autre de ces cas, ces alvéoles présentent des structures qui sont connues de l'homme du métier. On notera en outre que les arêtes 32 et 33 de maintien des joints font saillie à l'intérieur de cet espace libre 34.

Dans l'exemple illustré, comme le montre notamment la figure 4, chaque alvéole présente sensiblement une forme hexagonale. Une telle structure alvéolaire peut en particulier être du type en nid d'abeilles. Elle peut être réalisée en tout matériau approprié, de préférence en un matériau composite formé d'une matrice en résine, dans laquelle sont noyées des fibres aramides, par exemple en utilisant les fibres connues commercialement sous le nom de NOMEX^{®}. Cependant, à titre de matériau alternatif, on peut prévoir du polypropylène, du polycarbonate ou encore du papier.

Le matériau constitutif de la structure alvéolaire, définie ci-dessus, présente selon l'invention des propriétés d'isolation thermique supérieure à celles des matériaux constitutifs des profilés 30 et 31. Cela signifie typiquement que la conductivité thermique du matériau, constitutif de la structure 35, est nettement inférieure à la conductivité thermique du matériau constitutif de ces profilés. À titre indicatif, le rapport entre ces valeurs de conductivité est typiquement supérieur à 10. À titre d'exemple, les profilés 30 et 31 peuvent être réalisés en un alliage d'aluminium, dont la valeur de conductivité est comprise entre 100 et 250, ou bien en un acier, notamment inoxydable, dont la valeur de conductivité est comprise entre 10 et 20. En revanche, les valeurs de conductivité des matériaux constitutifs du bloc 35, qui ont été listés ci-dessus, sont typiquement inférieures à 1.

De manière tout particulièrement préférée, la fixation du bloc 35 sur les faces en regard 30A et 31A des profilés 30 et 31 est réalisée par collage. À cet effet on utilisera toute colle appropriée, notamment de type époxy. On notera que ce mode de fixation par collage présente des avantages spécifiques, notamment liés au fait qu'il permet de répartir les contraintes sur une grande surface. En d'autres termes, la contrainte maximale exercée en service possède une valeur relativement faible.

L'homme du métier choisira les dimensions des différents éléments mécaniques, de sorte que ces derniers puissent assurer leurs fonctions mécaniques respectives. Dans cet esprit, afin que le cadre structurel de vantail puisse remplir sa fonction mécanique, l'épaisseur E30 E31 de chaque profilé 30 et 31 est avantageusement supérieure à 1 millimètre. Par ailleurs, de manière à remplir la fonction d'isolation thermique, le bloc d'espacement présente avantageusement une épaisseur E35 supérieure à 10 millimètres. On notera que la dimension longitudinale du bloc n'est pas décisive, en ce qui concerne l'efficacité de l'isolation.

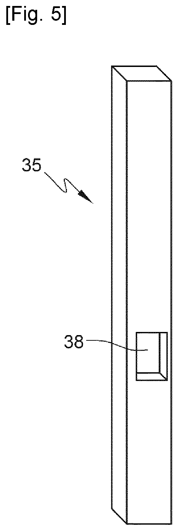

Comme cela est montré sur les figures 5 et 6, dans une variante de réalisation, le bloc d'espacement 35 peut être creusé d'un évidement local 38. Comme le montre notamment la figure 6, cet évidement est ménagé uniquement sur une partie de l'épaisseur du bloc 35, du côté du parement extérieur 26. À cet effet le profilé extérieur 31 est lui-même creusé d'une échancrure 39. Par ailleurs cet évidement s'étend uniquement sur une partie de la hauteur du bloc, comme le montre plus particulièrement la figure 5. Cet évidement permet la réception d'un accessoire du vantail, tel que l'organe de manoeuvre 22. À titre de variante non représentée, cet évidement peut permettre le logement de l'extrémité d'une poignée.

Les figures 7 et 8 illustrent une autre variante de réalisation de l'invention. Sur ces figures les éléments mécaniques analogues à ceux du premier mode de réalisation y sont affectés des mêmes numéros de référence, augmentés du nombre 100.

La figure 7 illustre un montant dit avant 103, en référence au sens d'avancée du vantail. Ce montant avant est équipé de deux profilés 130 et 131, qui sont globalement analogues à ceux 30 et 31 du premier mode de réalisation. En particulier, sur la figure 8, on a illustré un joint 190, de type classique, qui est fixé par encliquetage élastique sur les arêtes 132 et 133.

Ces profilés 130 et 131 diffèrent cependant de ceux 30 et 31, en ce qu'ils sont munis de deux nervures 137 et 137'. Ces nervures, qui font saillie l'une vers l'autre à partir des faces internes 130A et 131A, sont sensiblement parallèles aux arêtes 132 et 133. On note que ces nervures sont situées radialement vers l'intérieur, par rapport à ces arêtes.

Comme le montre la figure 7, la fixation mutuelle du bloc 135 et des profilés 130,131 est assurée par deux couches adhésives 138 et 139, respectivement intérieure et extérieure, qui sont réalisées notamment en une colle telle que décrite ci-dessus. Chaque couche 138 et 139 se compose d'une région longitudinale 138' et 139', de plus grande dimension, laquelle recouvre une face frontale respective 135A et 135B du bloc 135. Cette région longitudinale se prolonge par une région transversale 138"et 139", de plus faible dimension, laquelle recouvre en partie le bord radialement externe 135C du bloc 135.

De manière analogue, en référence à la figure 8, le montant arrière 104 est équipé de deux profilés 140 et 141, sur lesquels est fixé un joint 191. Ces profilés sont équipés de nervures 147 et 147', similaires à celles 137 et 137'ci-dessus. Le bloc d'espacement 145 est fixé sur ces profilés par deux couches adhésives 148 et 149. Comme dans le mode de réalisation de la figure 8, chaque couche comprend une région longitudinale 148'et 149', qui recouvre une face frontale respective 145A et 145B du bloc, ainsi qu'une région transversale 148"et 149"qui recouvre en partie le bord 145C de ce même bloc.

Le mode de réalisation des figures 7 et 8 présente des avantages spécifiques. En effet, la présence des nervures transversales du profilé, ainsi que des couches adhésives recouvrant au moins partiellement ces nervures, garantit un comportement mécanique particulièrement satisfaisant. Notamment dans le cas de charges s'exerçant selon les flèches F130 et F131 sur la figure 7, cette géométrie permet de faire travailler la couche adhésive en cisaillement, et non pas en clivage ni en pelage. Dans ces conditions, la structure du vantail est renforcée, ce qui permet de préserver son intégrité mécanique. En effet, les risques de rupture de la couche de colle sont significativement réduits.

Dans ce qui précède, les différents organes périphériques 3 à 6 sont tous munis d'un bloc d'espacement en un matériau présentant de hautes propriétés d'isolation thermique. Cependant, à titre de variante, comme représenté à la figure 9, on peut prévoir que seule une partie de la périphérie du vantail est équipée d'un tel bloc. Sur cette figure 9, les éléments mécaniques analogues à ceux du premier mode de réalisation y sont affectés des mêmes numéros de référence, augmentés du nombre 200.

De façon plus précise, sur cette figure 9, les montants verticaux 203 et 204 du vantail 201 sont réalisés selon l'invention, à savoir qu'ils incluent des blocs d'espacement 235 et 245, représentés de manière schématique. En revanche, les traverses horizontales 205 et 206 sont dépourvues d'un tel bloc, à savoir qu'elles sont réalisées conformément à l'art antérieur. Dans cet esprit, on peut prévoir que ces traverses 205 et 206 sont équipées d'un profilé classique, tel celui 303 décrit en référence à la figure 1.

Un tel agencement peut trouver son application, si les requis mécaniques l'exigent. Quand bien même la périphérie du vantail n'est pas entièrement équipée de blocs d'espacement, ce vantail présente des performances significativement améliorées par rapport à l'art antérieur, en termes d'isolation thermique. En particulier il est plus avantageux de prévoir un bloc d'espacement conforme à l'invention, au niveau des montants du vantail. En effet, ces montants représentent un pont thermique plus important en regard des traverses.

Les figures 10 et 11 illustrent une variante supplémentaire de réalisation de l'invention. Le vantail 401, conforme à cette variante, comprend tout d'abord un cadre structurel formé par des organes périphériques identiques à ceux du premier mode de réalisation. Par conséquent, sur ces figures 10 et 11, ils sont également affectés des références 3 à 6 et ne sont pas décrits plus en détail.

Ce vantail 401 diffère de celui du premier mode de réalisation, en ce qu'il est pourvu d'un cadre dit de baie, conforme à une variante avantageuse de l'invention. Ce cadre, qui s'étend à la périphérie externe de la vitre 420, se compose de quatre organes périphériques 403 à 406. La figure 11 illustre plus particulièrement la structure de l'un de ces organes 403, étant entendu que les autres organes 404 à 406 présentent une structure identique.

Sur ces figures 10 et 11 les éléments mécaniques de l'organe périphérique 403, qui sont analogues à ceux de l'organe périphérique 3 du premier mode de réalisation, y sont affectés des mêmes numéros de référence augmentés du nombre 400. Cet organe périphérique 403 comprend des profilés 430 et 431, ainsi qu'un bloc 435 d'espacement et d'isolation thermique. Chaque profilé assure le maintien, par tous moyens appropriés, d'un profilé respectif 490 et 491. De manière connue en soi, ces profilés coopèrent avec la vitre 420 mentionnée ci-dessus.

Le mode de réalisation des figures 10 et 11 fait intervenir un cadre de baie, dont les différents organes périphériques 403 à 406 sont réalisés conformément à l'invention. Par ailleurs ce cadre de baie est combiné à un cadre structurel, dont les différents organes périphériques 3 à 6 sont également réalisés selon l'invention. À titre de variante, on peut prévoir que ce cadre de baie est associé à un cadre structurel, tel que celui 203 à 206 de la figure 9, à savoir dont seuls les montants sont conformes à l'invention. À titre de variante supplémentaire, on peut également prévoir que seulement une partie des organes périphériques 403 à 406 sont réalisés selon l'invention, alors que l'autre partie de ces organes périphériques est conforme à l'art antérieur.

En résumé, lorsque le vantail conforme à l'invention n'inclut pas de cadres de baie, au moins une partie des organes périphériques constitutifs du cadre structurel sont réalisés conformément à l'invention. En revanche, lorsque ce vantail inclut un tel cadre de baie, au moins une partie des organes périphériques constitutifs du cadre structurel et/ou au moins une partie des organes périphériques constitutifs du cadre de baie sont réalisés selon l'invention. En particulier, on peut prévoir tout d'abord que le cadre structurel peut être réalisé selon l'invention, alors que le cadre de baie est conforme à l'art antérieur. On peut également prévoir que le cadre de baie est conforme à l'invention, alors que le cadre structurel est réalisé selon l'art antérieur.

L'invention présente de nombreux avantages, en regard de l'art antérieur. Comme cela ressort de ce qui précède l'invention fait appel à des profilés distincts, sans contact direct mutuel. Cela permet d'intercaler une structure alvéolaire, présentant des propriétés d'isolation thermique élevée, ce qui permet de réduire significativement les ponts thermiques. Par conséquent, l'invention confère au vantail une isolation thermique substantiellement améliorée par rapport à l'art antérieur.

Dans cet esprit on soulignera qu'il est du mérite de la Demanderesse d'avoir identifié l'origine des inconvénients, liés au vantail décrit dans le document japonais JP 2006 062634 présenté ci-dessus. En effet le profilé en forme de U, qui équipe ce vantail, intègre une âme centrale qui contribue, de par la nature métallique de ce profilé, à créer un pont thermique significatif. En regard de cette solution le fait de prévoir deux profilés distincts, conformément à l'invention, permet de supprimer sensiblement un tel pont thermique.

Au surplus, dans ce document japonais, la structure alvéolaire est formée par de l'aluminium. Cette mesure est défavorable sur le plan thermique, puisque cela contribue à créer une multiplicité de ponts thermiques. Au contraire, l'invention prévoit avantageusement de réaliser la structure alvéolaire des montants en un matériau possédant des propriétés élevées d'isolation thermique et, par ailleurs, pour le remplissage du vantail situé entre les deux montants, d'utiliser par exemple une mousse classique en matière plastique thermiquement isolante et non pas un nid d'abeille en aluminium.

Par ailleurs l'invention prend le parti de conserver les deux profilés précités, typiquement en aluminium, de part et d'autre de la structure alvéolaire ci-dessus. Cette caractéristique permet d'apporter la rigidité nécessaire au vantail, tout en assurant la fonction d'accrochage des joints d'étanchéité. Dans ces conditions, les joints utilisés peuvent être identiques à ceux de l'art antérieur, ce qui est avantageux en termes de simplicité et de prix de revient global. Encore autrement exprimé, les modifications apportées au vantail selon l'invention, par rapport à l'existant, sont limitées au strict nécessaire.

Enfin l'invention permet, de façon commode, de concevoir et de fabriquer des vantaux galbés. En effet, à la fois la structure alvéolaire et les profilés respectivement intérieur et extérieur peuvent faire l'objet d'une opération de cintrage, de façon commode.

On notera que l'utilisation de nid d'abeilles, en tant que structure alvéolaire, présente des avantages spécifiques. En effet ces nids d'abeilles apportent une bonne cohérence mécanique, notamment du fait qu'ils ne se délitent sensiblement pas. Par ailleurs, ils se prêtent de façon satisfaisante à une fixation par collage, au niveau des profilés respectivement intérieur et extérieur.

A titre de variante supplémentaire non représentée on peut prévoir d'utiliser, non pas un unique bloc d'espacement comme dans les exemples illustrés, mais au moins deux blocs d'espacement distincts, séparés les uns des autres. Dans ce cas, ces blocs sont disposés côte à côte selon la dimension longitudinale du profilé. Cette variante présente un avantage sur le plan économique, en ce qu'elle permet d'utiliser des blocs d'espacement de taille standard, aisément disponibles auprès des fournisseurs.

## Revendications

1. Vantail (1 ; 101 ; 201 ; 401) pour porte de véhicule de transport, notamment pour porte de tramway, bus, trolleybus, métro ou train, ce vantail comprenant :
- un parement (24) dit intérieur, destiné à être placé du côté intérieur de la caisse du véhicule, et un parement (26) dit extérieur, destiné à être placé du côté extérieur de la caisse du véhicule, lesdits parements délimitant un volume intérieur (V1) dudit vantail,
- une âme de remplissage (28) occupant le centre de l'espace interne, en vue de face
- un cadre structurel (3 - 6 ; 203-206) dit cadre de vantail, s'étendant à la périphérie d'au moins une partie de l'âme, en vue de face, ainsi que, le cas échéant, un cadre dit de baie (403-406) s'étendant à la périphérie d'au moins une partie d'une baie (420), ou vitre, appartenant au vantail
- ce cadre de vantail et/ou l'éventuel cadre de baie comportant au moins un organe périphérique, chaque organe périphérique comprenant
- un profilé dit intérieur (30 ; 130 ; 430), placé au voisinage du parement intérieur, ainsi qu'un profilé dit extérieur (31 ; 131 ; 431), placé au voisinage du parement extérieur, au moins un parmi le profilé intérieur et le profilé extérieur étant muni de moyens (32,33 ; 132,133 ; 432,433) de maintien d'un joint d'étanchéité (190,191 ; 490,491),
- des moyens d'espacement (35 ; 135 ; 235,245 ; 435) entre le profilé intérieur et le profilé extérieur,
- un joint d'étanchéité (190,191 ; 490,491), maintenu par les moyens (32,33 ; 132,133 ; 432,433) de maintien,
et pour au moins un organe périphérique (3-6 ; 203,204 ; 403-406) appartenant à au moins un parmi le cadre de vantail et le cadre de baie,
- le profilé intérieur (30 ; 130 ; 430) et le profilé extérieur (31 ; 131 ; 431) sont mutuellement distincts, ces profilés étant réalisés respectivement en un premier matériau et un second matériau, et
- les moyens d'espacement d'au moins un organe périphérique comprennent au moins un bloc d'espacement (35 ; 135 ; 235,245 ; 435) formé par une structure alvéolaire, ladite structure alvéolaire étant réalisée en un troisième matériau, ce troisième matériau présentant des propriétés d'isolation thermique supérieures à celles dudit premier matériau et dudit second matériau.

2. Vantail selon la revendication précédente, dans lequel le troisième matériau possède une conductivité thermique nettement inférieure aux conductivités thermiques à la fois du premier matériau et du second matériau.

3. Vantail selon la revendication précédente, dans lequel ledit troisième matériau est choisi dans le groupe constitué par un composite à base de résine et de fibres aramides, du polypropylène, du polycarbonate ou du papier.

4. Vantail selon l'une des revendications précédentes, dans lequel ladite structure alvéolaire est une structure en nid d'abeilles.

5. Vantail selon l'une des revendications précédentes, dans lequel ledit premier matériau et ledit second matériau sont confondus, en étant notamment de l'aluminium.

6. Vantail selon l'une des revendications précédentes, dans lequel chaque profilé respectivement intérieur (30) et extérieur (31) s'étend sensiblement jusqu'à l'extrémité d'un parement respectif (24,26).

7. Vantail selon l'une des revendications précédentes, dans lequel le bloc d'espacement est fixé sur les profilés respectivement intérieur (130,140) et extérieur (131,141), respectivement par l'intermédiaire d'une couche adhésive intérieure (138,148) et d'une couche adhésive extérieure (139,149).

8. Vantail selon la revendication précédente, dans lequel chacune desdites couches adhésives comprend une région longitudinale (138', 148', 139', 149') recouvrant une face frontale du bloc, ainsi qu'une région transversale (138", 148", 139", 149") intercalée entre un bord latéral du bloc d'espacement et une nervure (137,137',147,147') dudit profilé.

9. Vantail selon l'une des revendications précédentes, dans lequel ladite structure alvéolaire (35) comprend une pluralité d'alvéoles (36), lesquelles sont disposées les unes à côté des autres, les extrémités opposées (36A, 36B) de chaque alvéole débouchant sur les faces en regard (30A, 31A) des profilés respectivement intérieur (30) et extérieur (31).

10. Vantail selon l'une des revendications précédentes, dans lequel la structure alvéolaire (35) est disposée du côté interne des profilés (30,31), selon une vue de face du vantail, de façon à délimiter un espace libre (34) du côté externe des profilés.

11. Vantail selon l'une des revendications précédentes, dans lequel le cadre périphérique comprend deux montants verticaux (203,204) et deux traverses horizontales (205,206), seuls les montants verticaux comprenant des organes périphériques équipés d'un bloc d'espacement (235,245) formé par ladite structure alvéolaire.

12. Vantail selon l'une revendications précédentes, dans lequel le bloc d'espacement est creusé d'un évidement local (38) permettant le passage d'un accessoire du vantail, notamment un organe de manoeuvre (22) ou une poignée.

13. Vantail selon l'une des revendications précédentes, dans lequel l'épaisseur (E30, E31) de chacun des profilés respectivement intérieur (30) et extérieur (31) est supérieure à 1 millimètre, et/ou l'épaisseur (E35) du bloc d'espacement est supérieure à 10 millimètres.

14. Porte pour véhicule de transport, notamment du type train, tramway, métros ou encore trolleybus ou bus, comprenant un dormant solidaire du bâti dudit véhicule, ainsi qu'au moins un vantail (1 ; 101 ; 201 ; 401) conforme à l'une quelconque des revendications précédentes, monté mobile par rapport audit dormant.

15. Véhicule de transport, notamment du type train, tramway, métros ou encore trolleybus ou bus, comprenant au moins une porte conforme à la revendication précédente.

## Patentansprüche

1. Türblatt (1; 101; 201; 401) für eine Tür eines Transportfahrzeugs, insbesondere für eine Straßenbahn-, Bus-, Trolleybus-, U-Bahn- oder Zugtür, wobei dieses Türblatt umfasst:
- eine als Innenverkleidung bezeichnete Verkleidung (24), die dazu bestimmt ist, an der Innenseite der Fahrzeugkarosserie angebracht zu werden, und eine als Außenverkleidung bezeichnete Verkleidung (26), die dazu bestimmt ist, an der Außenseite der Fahrzeugkarosserie angebracht zu werden, wobei die Verkleidungen ein Innenvolumen (V1) des Blattes begrenzen,
- einen Füllkern (28), der in der Vorderansicht die Mitte des Innenraums einnimmt,
- einen Strukturrahmen (3 - 6; 203-206), genannt Blattrahmen, der sich in der Vorderansicht bis zum Rand von zumindest einem Teil des Kerns erstreckt, sowie gegebenenfalls einen sogenannten Fensterrahmen (403-406), der sich bis zum Rand von zumindest einem Teil eines Fensters (420) oder einer Fensteröffnung erstreckt, das zum Türblatt gehört,
- dieser Blattrahmen und/oder der eventuelle Fensterrahmen umfasst mindestens ein Randelement, wobei jedes Randelement umfasst
- ein sogenanntes Innenprofil (30; 130; 430), das in der Nähe der Innenverkleidung angeordnet ist, sowie ein sogenanntes Außenprofil (31; 131; 431), das in der Nähe der Außenverkleidung angeordnet ist, wobei mindestens eines der Innenprofile und des Außenprofils mit Mitteln (32, 33; 132, 133; 432, 433) zum Aufrechterhalten einer Dichtung (190, 191; 490, 491) versehen ist,
- Abstandsmittel (35; 135; 235, 245; 435) zwischen dem Innenprofil und dem Außenprofil,
- eine Dichtung (190, 191; 490, 491), die von den Abstandsmitteln (35; 135; 235, 245; 435) gehalten wird,
und für mindestens ein Randelement (3-6; 203,204; 403-406), das zu mindestens einem der Blattrahmen und/oder Fensterrahmen gehört,
- das Innenprofil (30; 130; 430) und das Außenprofil (31; 131; 431) voneinander verschieden sind, wobei diese Profile jeweils aus einem ersten und einem zweiten Material bestehen, und
- die Abstandsmittel von mindestens einem peripheren Element mindestens einen Abstandsblock (35; 135; 235, 245; 435) umfassen, der durch eine Wabenstruktur gebildet ist, wobei die Wabenstruktur aus einem dritten Material hergestellt ist und dieses dritte Material bessere Wärmedämmeigenschaften als das erste und das zweite Material aufweist.

2. Blatt nach dem vorhergehenden Anspruch, wobei das dritte Material eine Wärmeleitfähigkeit aufweist, die deutlich niedriger ist als die Wärmeleitfähigkeiten sowohl des ersten als auch des zweiten Materials.

3. Blatt nach dem vorhergehenden Anspruch, bei dem das dritte Material aus der Gruppe ausgewählt ist, die aus einem Verbundwerkstoff auf der Basis von Harz und Aramidfasern, Polypropylen, Polycarbonat oder Papier besteht.

4. Blatt nach einem der vorhergehenden Ansprüche, bei dem die Zellstruktur eine Wabenstruktur ist.

5. Blatt nach einem der vorhergehenden Ansprüche, bei dem das erste Material und das zweite Material gleich sind, insbesondere Aluminium sind.

6. Blatt nach einem der vorhergehenden Ansprüche, bei dem sich jedes Profil, nämlich das innere (30) bzw. das äußere (31), im Wesentlichen bis zum Ende einer jeweiligen Verkleidung (24, 26) erstreckt.

7. Blatt nach einem der vorhergehenden Ansprüche, bei dem der Abstandsblock mittels einer inneren Klebeschicht (138,148) bzw. einer äußeren Klebeschicht (139,149) an dem inneren (130,140) bzw. äußeren (131,141) Profil befestigt ist.

8. Blatt nach dem vorhergehenden Anspruch, bei dem jede der Klebeschichten einen Längsbereich (138', 148', 139', 149') umfasst, der eine Vorderseite des Blocks bedeckt, sowie einen Querbereich (138", 148", 139", 149"), der zwischen einer Seitenkante des Abstandsblocks und einer Rippe (137,137', 147,147') des Profils angeordnet ist.

9. Blatt nach einem der vorhergehenden Ansprüche, bei dem die Zellstruktur (35) eine Vielzahl von Zellen (36) umfasst, die nebeneinander angeordnet sind, wobei die gegenüberliegenden Enden (36A, 36B) jeder Zelle sich zu den gegenüberliegenden Flächen (30A, 31A) des inneren (30) bzw. äußeren (31) Profils öffnen.

10. Blatt nach einem der vorhergehenden Ansprüche, bei dem die Wabenstruktur (35) in Vorderansicht des Blattes auf der Innenseite der Profile (30, 31) angeordnet ist, um einen Freiraum (34) auf der Außenseite der Profile abzugrenzen.

11. Blatt nach einem der vorhergehenden Ansprüche, bei dem der Umfangsrahmen zwei vertikale Pfosten (203,204) und zwei horizontale Querstreben (205,206) umfasst, wobei nur die vertikalen Pfosten Umfangselemente umfassen, die mit einem durch die Wabenstruktur gebildeten Abstandsblock (235,245) ausgestattet sind.

12. Blatt nach einem der vorhergehenden Ansprüche, bei dem der Abstandsblock eine lokale Aussparung (38) aufweist, die den Durchgang eines Zubehörteils des Blattes, insbesondere eines Betätigungselements (22) oder eines Griffs, ermöglicht.

13. Blatt nach einem der vorhergehenden Ansprüche, bei dem die Dicke (E30, E31) des Innenprofils (30) bzw. Außenprofils (31) jeweils größer als 1 Millimeter ist und/oder die Dicke (E35) des Abstandsblocks größer als 10 Millimeter ist.

14. Tür für ein Transportfahrzeug, insbesondere vom Typ Zug, Straßenbahn, U-Bahn oder auch Oberleitungsbus oder Bus, umfassend einen am Rahmen des Fahrzeugs befestigten Rahmen sowie mindestens ein Blatt (1; 101; 201; 401) gemäß einem der vorhergehenden Ansprüche, das relativ zum Rahmen beweglich montiert ist.

15. Transportfahrzeug, insbesondere vom Typ Zug, Straßenbahn, U-Bahn oder auch Oberleitungsbus oder Bus, umfassend mindestens eine Tür gemäß dem vorhergehenden Anspruch.

## Claims

1. Leaf (1; 101; 201; 401) for a transport vehicle door, in particular for a tram, bus, trolleybus, metro or train door, this leaf comprising:
- a facing (24) called interior, intended to be placed on the interior side of the vehicle body, and a facing (26) called exterior, intended to be placed on the exterior side of the vehicle body, said facings delimiting an interior volume (V1) of said leaf,
- a filling core (28) occupying the center of the internal space, in front view,
- a structural frame (3 - 6; 203-206) called a leaf frame, extending to the periphery of at least part of the core, in front view, as well as, where appropriate, a so-called bay frame (403-406) extending to the periphery of at least part of a bay (420), or window, belonging to the leaf,
- this leaf frame and/or the possible bay frame comprising at least one peripheral member, each peripheral member comprising
• a so-called interior profile (30; 130; 430), placed in the vicinity of the interior facing, as well as a so-called exterior profile (31; 131; 431), placed in the vicinity of the exterior facing, at least one of the interior profile and the exterior profile being provided with means (32, 33; 132, 133; 432, 433) for maintaining a seal (190, 191; 490, 491),
• spacing means (35; 135; 235, 245; 435) between the inner profile and the outer profile,
• a seal (190,191; 490,491), maintained by the maintaining means (32, 33; 132, 133; 432, 433),
and for at least one peripheral member (3-6; 203,204; 403-406) belonging to at least one of the leaf frame and the bay frame,
- the inner profile (30; 130; 430) and the outer profile (31; 131; 431) are mutually distinct, these profiles being made respectively of a first material and a second material, and
- the spacing means of at least one peripheral member comprise at least one spacing block (35; 135; 235, 245; 435) formed by a honeycomb structure, said honeycomb structure being made of a third material, this third material having thermal insulation properties superior to those of said first material and said second material.

2. Leaf according to the preceding claim, wherein the third material has a thermal conductivity significantly lower than the thermal conductivities of both the first material and the second material.

3. Leaf according to the preceding claim, in which said third material is chosen from the group consisting of a composite based on resin and aramid fibers, polypropylene, polycarbonate or paper.

4. Leaf according to one of the preceding claims, in which said cellular structure is a honeycomb structure.

5. Leaf according to one of the preceding claims, in which said first material and said second material are the same, in particular being aluminum.

6. Leaf according to one of the preceding claims, in which each profile, respectively interior (30) and exterior (31), extends substantially to the end of a respective facing (24, 26).

7. Leaf according to one of the preceding claims, in which the spacer block is fixed to the inner (130,140) and outer (131,141) profiles respectively, respectively by means of an inner adhesive layer (138,148) and an outer adhesive layer (139,149).

8. Leaf according to the preceding claim, in which each of said adhesive layers comprises a longitudinal region (138', 148', 139', 149') covering a front face of the block, as well as a transverse region (138", 148", 139", 149") interposed between a lateral edge of the spacing block and a rib (137,137', 147,147') of said profile.

9. Leaf according to one of the preceding claims, in which said cellular structure (35) comprises a plurality of cells (36), which are arranged next to each other, the opposite ends (36A, 36B) of each cell opening onto the facing faces (30A, 31A) of the inner (30) and outer (31) profiles respectively.

10. Leaf according to one of the preceding claims, in which the honeycomb structure (35) is arranged on the internal side of the profiles (30, 31), according to a front view of the leaf, so as to delimit a free space (34) on the external side of the profiles.

11. Leaf according to one of the preceding claims, in which the peripheral frame comprises two vertical uprights (203,204) and two horizontal crosspieces (205,206), only the vertical uprights comprising peripheral members equipped with a spacing block (235,245) formed by said honeycomb structure.

12. Leaf according to one of the preceding claims, in which the spacing block is hollowed out with a local recess (38) allowing the passage of an accessory of the leaf, in particular an operating member (22) or a handle.

13. Leaf according to one of the preceding claims, in which the thickness (E30, E31) of each of the inner (30) and outer (31) profiles respectively is greater than 1 millimeter, and/or the thickness (E35) of the spacer block is greater than 10 millimeters.

14. Door for a transport vehicle, in particular of the train, tram, metro or even trolleybus or bus type, comprising a frame secured to the frame of said vehicle, as well as at least one leaf (1; 101; 201; 401) in accordance with any one of the preceding claims, mounted to move relative to said frame.

15. Transport vehicle, in particular of the train, tram, metro or even trolleybus or bus type, comprising at least one door in accordance with the preceding claim.
